# NEUE EUROPÄISCHE PATENTSCHRIFT

(11) **EP 2 835 471 B2**
(45) Veröffentlichungstag und Bekanntmachung des Hinweises auf die Entscheidung über den Einspruch: **01.01.2020**
(45) Hinweis auf die Patenterteilung: 14.09.2016
(21) Anmeldenummer: 14176858.0
(22) Anmeldetag: 14.07.2014
(51) Int. Cl.: E01C 23/088, E01C 23/12, B65G 21/08

(54) **Selbstfahrende Straßenfräsmaschine, sowie Verfahren zum Abfräsen und Abtransportieren eines abgefrästen Materialstroms**
Self-propelled street milling machine and method for milling and transporting a flow of milled material
Fraiseuse routière et procédé de fraisage et de transport du flux de matériau fraisé

(30) Priorität: 26.07.2013 DE 102013214675
(43) Veröffentlichungstag der Anmeldung: 11.02.2015
(73) Patentinhaber: Wirtgen GmbH, 53578 Windhagen (DE)
(72) Erfinder: Ley, Herbert, 53562 St. Katharinen (DE); Verhaelen, Philip, 51103 Köln (DE); Barimani, Cyrus, 53639 Königswinter (DE); Hähn, Günter, 53639 Königswinter (DE)
(74) Vertreter: dompatent von Kreisler Selting Werner - Partnerschaft von Patent- und Rechtsanwälten mbB

(56) Entgegenhaltungen:
- EP-A1- 1 507 925
- DE-A1- 10 223 819
- DE-A1- 10 323 199
- JP-A- 2002 192 008
- US-A- 5 722 789

## Beschreibung

Die Erfindung betrifft eine selbstfahrende Straßenfräsmaschine zum Bearbeiten von Fahrbahnen, nach dem Oberbegriff des Anspruchs 1, sowie ein Verfahren zum Abfräsen und Abtransportieren eines abgefrästen Materialstroms einer Straßenfräsmaschine nach dem Oberbegriff des Anspruchs 12.

Eine Frontladerfräse ist beispielsweise aus der EP 1 507 925, Fig. 1, bekannt. Die bekannten Straßenfräsen weisen einen von Kettenlaufwerken oder Rädern getragenen Maschinenrahmen auf. In dem Maschinenrahmen ist eine Fräswalze quer zur Fahrtrichtung gelagert. Um einen möglichst vollständigen Abtransport des abgefrästen Materials zu erreichen, ist die Fräswalze in der Regel von einem Gehäuse umgeben, bei dem die in Fahrtrichtung weisende Wand als Abdeckschild mit einer Durchtrittsöffnung für das abgefräste Material ausgebildet ist. Das von der Fräswalze abgearbeitete Material wird von einem ersten Transportband übernommen, das das abgearbeitete Material am vorderen Ende der Fräsmaschine auf ein zweites Transportband überträgt, das zum Transport auf eine Ladefläche eines Lastkraftwagens in der Neigung und seitlich verschwenkbar ist. Kleinfräsen haben nur ein einziges Transportband, das in Fahrtrichtung nach hinten gerichtet ist und ebenfalls in der Neigung und seitlich verschwenkbar ausgebildet sein kann. Eine Ausführungsform dieser Straßenfräse, die sogenannte Heckladerfräse, ist beispielsweise in Fig. 5 der EP 1 507 925 dargestellt.

Der abgefräste Materialstrom tritt im Betrieb am oberen Abwurfende der aus mindestens einem Transportband bestehenden Fördereinrichtung in Form einer Wurfparabel aus der Fördereinrichtung aus und wird auf eine Abwurfstelle, z. B. auf eine Ladefläche eines Lastkraftwagens, abgeladen. Die Wurfparabel hängt von der variabel einstellbaren Fördergeschwindigkeit, von der Zusammensetzung des abgefrästen Materials und von dem Steigungswinkel des letzten Transportbandes ab.

Entsprechend dieser berechenbaren Wurfparabel können Beladungsvorgänge und die Positionierung der Fördereinrichtung oder des Lastkraftwagens automatisiert werden (DE 10 2012 215 013 A1).

Durch äußere Umwelteinflüsse, wie z. B. Starkwind oder Druckwellen die durch an der Baustelle vorbeifließenden Verkehr erzeugt werden, kann die Berechenbarkeit der tatsächlichen Wurfparabel und der Auftreffstelle beeinträchtigt sein. Weiterhin können einzelne Partikel des Materialstroms aus dem Hauptgutstrom, der im Wesentlichen der Wurfparabel folgt, herausgelöst werden und eine andere Bahn einnehmen.

### Infolgedessen können

- Teile des Gutstromes nicht wie vorgesehen auf den Lkw verladen und abtransportiert werden, wodurch zusätzliche Kehrarbeiten anfallen,
- der vorbeifließende Verkehrs an einer Baustelle durch den Hauptgutstrom verlassende Fräsgut-Partikel beeinträchtigt werden, und im Extremfall Beschädigungen an vorbeifahrenden Fahrzeugen auftreten.

Der Erfindung liegt daher die Aufgabe zugrunde, eine Straßenfräsmaschine und ein Verfahren zum Abfräsen und Abtransportieren eines abgefrästen Materialstroms anzugeben, bei denen der Abwurf des abgefrästen Materialstroms besser berechenbar ist und besser reproduzierbar ausführbar ist.

Zur Lösung dieser Aufgabe ist erfindungsgemäß vorgesehen, dass die Fördereinrichtung an dem Abwurfende eine Abschirmeinrichtung aufweist, die das abgefräste und die Fördereinrichtung verlassende Material ohne Beeinflussung der Wurfparabel zumindest auf einem anfänglichen Teil des Weges zur Abwurfstelle zumindest mit Seitenteilen abschirmt.

Die Erfindung sieht in vorteilhafter Weise vor, dass an dem Abwurfende der Fördereinrichtung eine Abschirmeinrichtung angeordnet ist, die einerseits äußere Einflüsse, wie starke Windgeschwindigkeit in Querrichtung nach innen abschirmt und andererseits das Herauslösen einzelner Teile des Fräsgutes aus dem Hauptgutstrom nach außen abschirmt, ohne die sich aufgrund der Fördergeschwindigkeit des Steigungswinkels der Fördereinrichtung und der Art des abgefrästen Materials ergebende Wurfparabel zu beeinflussen. Dabei ist die Abdeckeinrichtung so angeordnet, dass sie nicht in den Kontakt mit dem Hauptgutstrom gelangen kann.

Vorzugsweise ist die Abschirmeinrichtung während des Betriebs in einer Betriebsposition angeordnet, während sie für den Transport der Straßenfräsmaschine in einer Transportposition angeordnet sein kann. Dies hat den Vorteil, dass die Gesamtlänge der Maschine bei dem Transport oder dem Verbringen der Maschine an eine andere Arbeitsstelle nicht unnötig vergrößert wird.

Hierzu kann vorgesehen sein, dass die Abschirmeinrichtung von einer Betriebsposition in eine Transportposition überführbar ist. Die Abschirmeinrichtung kann beispielsweise durch einen Schwenkvorgang, oder über ein Getriebe, vorzugsweise ein Gelenkgetriebe, oder eine Schienenführung von der Betriebsposition in eine Transportposition und zurück überführbar sein. Alternativ kann die Abschirmeinrichtung in der Betriebs- bzw. Transportposition
montierbar/demontierbar sein.

Dabei kann die Abschirmeinrichtung seitlich um eine im Wesentlichen orthogonal zu der Ladefläche der Fördereinrichtung verlaufenden Achse, oder einer im Wesentlichen vertikalen Achse von einer Betriebsposition in eine Transportposition verschwenkbar sein.

Alternativ kann die Abschirmeinrichtung in Längsrichtung der Fördereinrichtung von einer hinteren Transportposition in eine vordere Betriebsposition und zurück verschwenkbar oder verschiebbar sein. Dies kann beispielsweise mit Hilfe eines Gelenkgetriebes oder einer Schienenführung ausgeführt werden.

Nach einer weiteren Alternative kann die Abschirmeinrichtung um eine im Wesentlichen horizontale Achse von einer Betriebsposition vorzugsweise nach unten in eine Transportposition verschwenkbar sein.

Vorzugsweise ist vorgesehen, dass die Abschirmeinrichtung einen U-förmigen Querschnitt aufweist, der das abgefräste Material seitlich mit Seitenteilen und nach oben mit einer Abdeckung abschirmt. Eine derartige Abschirmeinrichtung umgibt die Wurfparabel sowohl seitlich als auch nach oben.

Bei einer weiteren Ausführungsform kann vorgesehen sein, dass die Abschirmeinrichtung mehrteilig aus seitlich verschwenkbaren oder verschiebbaren oder montierbaren Klappen mit oder ohne eine Abdeckung gebildet ist.

Die Abdeckung der Abschirmeinrichtung kann ein Deckblech oder ein Siebblech oder ein flexibles Flächengebilde aufweisen. Bei einem flexiblen Flächengebilde, z. B. einem Gewebe oder einer Plane, ist es auch möglich, die Abdeckung als Rollladen zu gestalten, oder als aufrollbares Flächengebilde, z. B. aus einem Gummigewebe.

Zumindest die Abdeckung der Abschirmeinrichtung kann einen Krümmungsradius in Förderrichtung aufweisen, der größer oder gleich der weitestgehenden Wurfparabel bei maximaler Fördergeschwindigkeit des abgefrästen Materials ist. Auf diese Weise ist sichergestellt, dass die Abschirmeinrichtung die Wurfparabel nicht beeinflussen kann und insbesondere keinen Diffusoreffekt erzeugen kann.

Die Seitenteile der Abschirmeinrichtung können eine in Förderrichtung sich nach unten erweiternde Höhe aufweisen. Dies hat den Vorteil, dass eine seitliche Abschirmung auch bei der niedrigsten Fördergeschwindigkeit gewährleistet ist.

Im Folgenden werden unter Bezugnahme auf die Zeichnungen Ausführungsbeispiele der Erfindung näher erläutert.

Es zeigen:
- Fig. 1: den Beladungsvorgang bei einer Frontladerfräse,
- Fig. 2: eine Abschirmeinrichtung in Betriebsposition,
- Fig. 3a bis 3c: die Abschirmeinrichtung in unterschiedliche Transportpositionen,
- Fig. 4a: eine mehrteilige Abschirmeinrichtung ohne Abdeckung in Transportposition,
- Fig. 4b: eine mehrteilige Abschirmeinrichtung mit Abdeckung in Betriebsposition,
- Fig. 5a 5b: eine Abschirmeinrichtung, die mit einem Gelenkgetriebe verschiebbar ist, und
- Fig. 6: eine Abschirmeinrichtung mit verlängerten Seitenteilen.

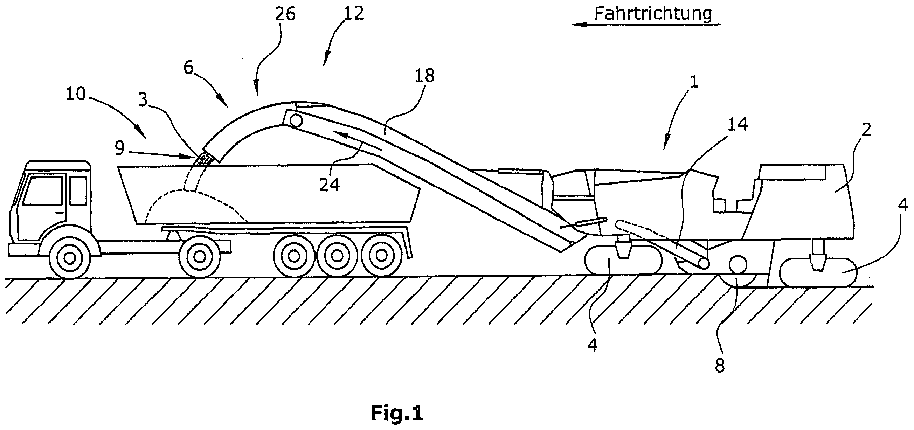

Eine Fräsmaschine 1 zum Bearbeiten von Fahrbahnen in der Ausführungsform einer Frontladerfräse ist in Fig. 1 gezeigt.

Die Fräsmaschine 1 dient zum Abfräsen von Fahrbahnen aus Asphalt, Beton o. dgl.

Die Fräsmaschine 1 weist einen Maschinenrahmen 2 auf, der von Kettenlaufwerken 4 oder Rädern getragen wird. In dem Maschinenrahmen 2 ist eine Fräswalze 8 gelagert, die sich quer zur Fahrtrichtung erstreckt. Es versteht sich, dass sich ein entsprechendes Transportband 18 auch z. B. als einzige Fördereinrichtung an einer Heckladerfräse befinden kann.

Bei einer Hecklader-Fräsmaschine wird das abgefräste Material 3 entgegen der Fahrtrichtung abgeworfen, während bei einer Frontlader-Fräsmaschine gemäß Fig. 1 das abgefräste Material 3 in Fahrtrichtung nach vorne auf ein Transportfahrzeug 10 befördert wird. In Fahrtrichtung vor der Fräswalze 8 ist eine erste aus einem Transportband bestehende Fördereinrichtung 14 angeordnet. Das erste Transportband 14 befördert das abgefräste Material 3 zu einer zweiten, aus einem Transportband 18 bestehenden Fördereinrichtung. Das zweite Transportband 18 ist über einen verstellbaren Neigungswinkel höhenverstellbar und kann zusätzlich seitlich um beispielsweise ± 30° verschwenkt werden, so dass auch neben der Fahrspur der Straßenfräsmaschine 1 fahrende Transportfahrzeuge 10 beladen werden können.

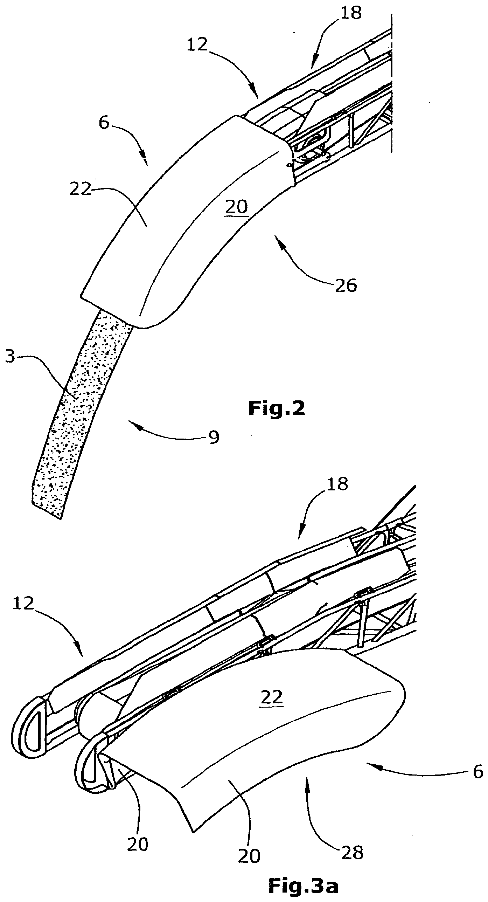

Fig. 2 zeigt eine an einem Abwurfende 12 der Fördereinrichtung 18 angeordnete im Wesentlichen im Querschnitt U-förmige Abschirmeinrichtung 6 mit Seitenteilen 20, die im Wesentlichen beidseitig vertikal von einer Abdeckung 22 der Abschirmeinrichtung nach unten abstehen.

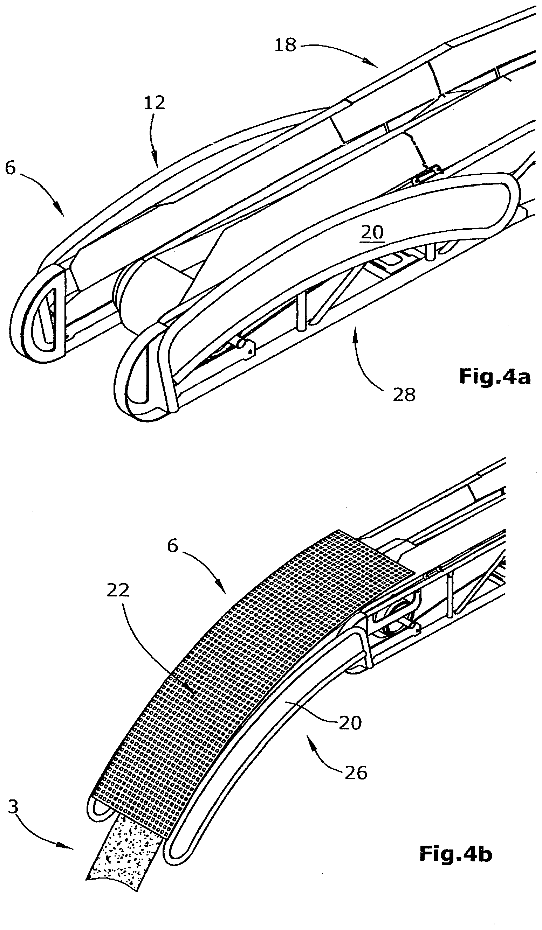

Die Abschirmeinrichtung 6 ist in der Fig. 2 als einteiliges Element dargestellt. Es versteht sich aber, dass die Abschirmeinrichtung 6 auch mehrteilig gestaltet sein kann, wie in Verbindung mit den Fign. 4a und 4b noch erläutert wird.

Die Abschirmeinrichtung 6 ist in Fig. 2 in ihrer Betriebsposition 26 gezeigt, in der sie das Material 3, das entlang einer Wurfparabel 9 abgeworfen wird, umschließt, ohne die Wurfparabel 9 selbst zu beeinflussen und ohne den Hauptgutstrom des Materialstroms zu berühren.

Die Krümmung der Abdeckung 22 ist daher mit einem Krümmungsradius in Förderrichtung 24 gekrümmt, der größer oder gleich der weitestgehenden Wurfparabel 9 bei maximaler Fördergeschwindigkeit der Fördereinrichtung für das abgefräste Materials 3 ist.

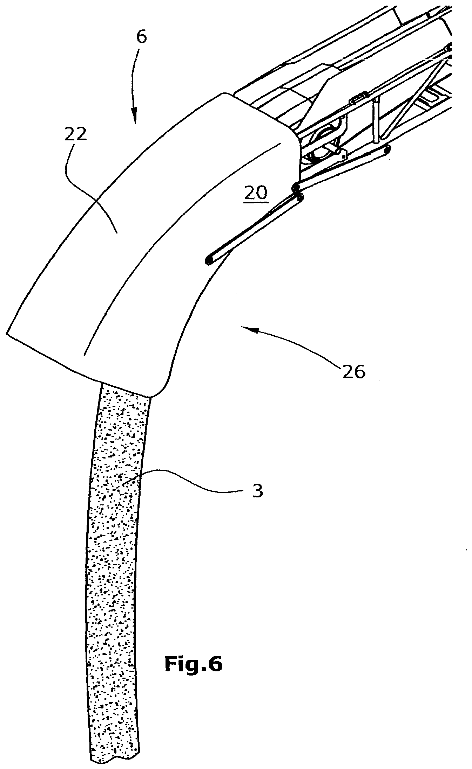

Damit die Abschirmeinrichtung 6 auch bei niedrigen Fördergeschwindigkeiten eine Abschirmung gewährleisten kann, kann vorgesehen sein, dass die Seitenteile 20 eine in Förderrichtung nach unten zunehmende Höhe aufweisen, wie in dem Ausführungsbeispiel der Fig. 6 dargestellt.

Die Fign. 3a bis 3c zeigen unterschiedliche Ausführungsbeispiele, bei denen die Abschirmeinrichtung 6 von der in Fig. 2 gezeigten Betriebsposition 26 in eine Transportposition 28 überführt worden ist.

So zeigt beispielsweise Fig. 3a ein seitliches Verschwenken der Abschirmeinrichtung 6 um eine im Wesentlichen vertikale Achse bzw. eine Achse, die orthogonal zu dem Abwurfende 12 der Fördereinrichtung 18 oder um eine im Wesentlichen orthogonal zu der Ladefläche am Abwurfende 12 der Fördereinrichtung 18 verlaufende Achse. Dabei wird die Abschirmeinrichtung 6 seitlich neben das Abwurfende 12 der Fördereinrichtung 18 verschwenkt.

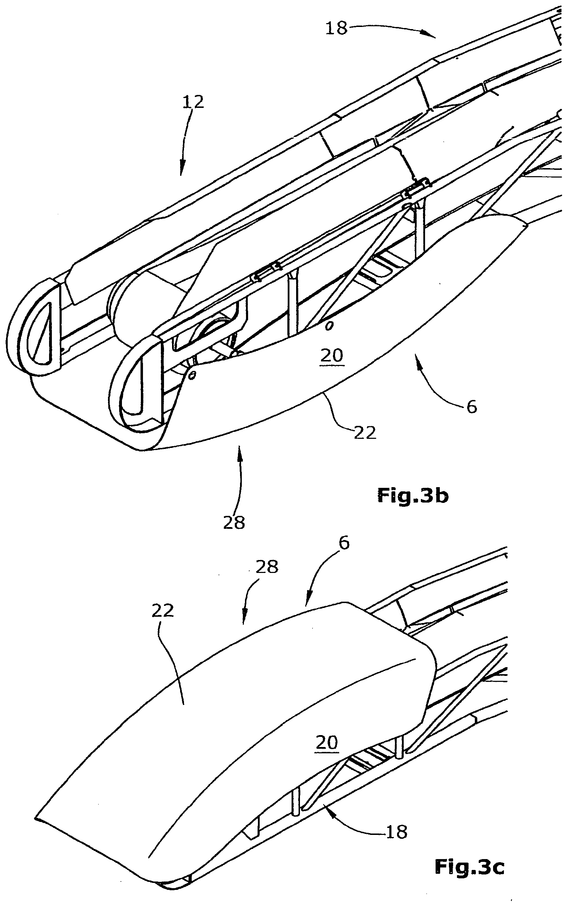

Fig. 3b zeigt eine andere Ausführungsform, bei der die Abschirmeinrichtung 6 um eine im Wesentlichen horizontale Achse, vorzugsweise nach unten verschwenkbar ist, um in eine Transportposition 28 überführt und dort arretiert zu werden.

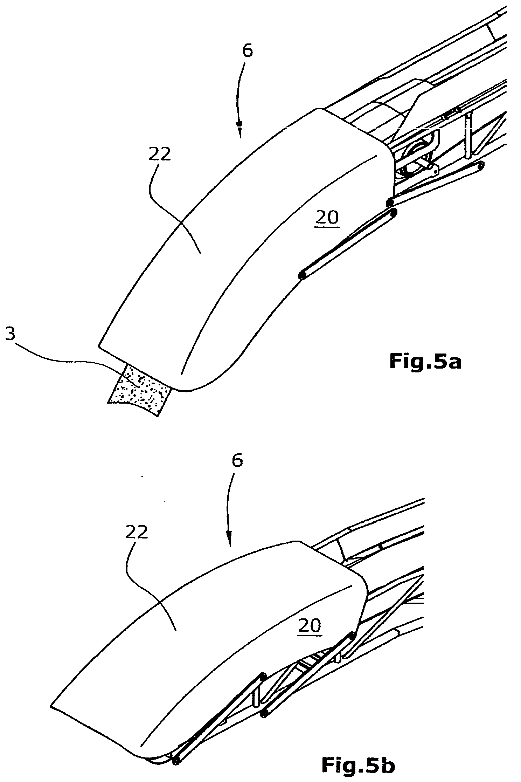

Fig. 3c zeigt schematisch eine Ausführungsform, bei der die Abschirmeinrichtung 6 entgegen der Fördereinrichtung 24 nach hinten verschoben ist, z. B. mit Hilfe von entsprechend geformten Schienenführungen oder mit Hilfe eines Viergelenkgetriebes, wie in den Fign. 5a, 5b und 6 dargestellt.

Fig. 4a zeigt eine mehrteilige Abschirmeinrichtung 6, die entweder nur aus zwei seitlich verschwenkbaren Seitenteilen 20, oder wie in Fig. 4b in der Betriebsposition 26 zusätzlich aus einer Abdeckung 22 bestehen kann. Die Seitenteile 20 können sich bei den Ausführungsbeispielen der Fign. 4a und 4b, wie in Fig. 6 dargestellt, in Förderrichtung erweitern, um eine seitliche Abschirmung auch bei niedrigster Fördergeschwindigkeit zu gewährleisten.

Die Abdeckung 22 kann aus verschiedenen Materialien gebildet sein, z. B. aus einem durchgängigen Blechteil oder einem Siebblech oder aus einem aufrollbaren Gewebe, insbesondere einem Gummigewebe oder eine Plane, wobei die Abdeckung auch in der Art einer Rollladen entlang von Führungen an den Seitenteilen 20 von der Transportposition 28 in eine Betriebsposition 26 überführt werden kann.

Schließlich kann die Abdeckung 22 verschiebbar oder aufrollbar gestaltet sein, während die Seitenteile verschwenkbar sind.

Im Ergebnis ermöglichen die verschiedenen Ausführungsbeispiele der Abschirmeinrichtung 6 das Abschirmen äußerer Einflüsse wie beispielsweise starken Winden, damit diese nicht die Flugbahn entlang der Wurfparabel 9 beeinträchtigen können. Besonders vorteilhaft ist auch die Abdeckung 22 nach oben, die einerseits die Flugbahn der Abwurfparabel nicht beeinträchtigt und eine Berührung mit dem abgefrästen Material 3 grundsätzlich vermeidet, und andererseits aber gemeinsam mit den Seitenteilen 20 geeignet ist ein Verlassen der sich normalerweise ergebenden Wurfparabel 9 des Hauptgutstroms durch einzelne Partikel weitestgehend auszuschließen.

Fig. 6 zeigt eine über ein Viergelenkgetriebe verschwenkbare Abschirmeinrichtung 6 mit nach unten erweiterten Seitenklappen 20 bei einem Hauptgutstrom mit der niedrigsten Fördergeschwindigkeit der Fördereinrichtung 18.

## Patentansprüche

1. Selbstfahrende Straßenfräsmaschine (1), insbesondere Kaltfräse, zum Bearbeiten von Fahrbahnen, mit einer an einem Maschinenrahmen (2) gelagerten Fräswalze (8), mindestens einer an dem Maschinenrahmen (2) angeordneten Fördereinrichtung (18), die das abgefräste Material (3) von der Fräswalze (8) übernimmt und in Förderrichtung (24) an einem Abwurfende (12) entlang einer Wurfparabel (9) auf eine Abwurfstelle ablädt,
**dadurch gekennzeichnet, dass**
die Fördereinrichtung (18) an dem Abwurfende (12) eine Abschirmeinrichtung (6) aufweist, die das abgefräste und die Fördereinrichtung (18) verlassende Material ohne Beeinflussung der Wurfparabel (9) auf einem Teil des Weges zur Abwurfstelle zumindest mit Seitenteilen (20) abschirmt

2. Straßenfräsmaschine (1) nach Anspruch 1, **dadurch gekennzeichnet, dass** die Abschirmeinrichtung (6) in einer Betriebsposition (26) oder in einer Transportposition (28) angeordnet ist.

3. Straßenfräsmaschine (1) nach Anspruch 1 oder 2, **dadurch gekennzeichnet, dass** die Abschirmeinrichtung (6) von einer Betriebsposition (26) in eine Transportposition (28) überführbar ist.

4. Straßenfräsmaschine (1) nach einem der Ansprüche 1 bis 3, **dadurch gekennzeichnet, dass** die Abschirmeinrichtung (6) seitlich um eine im Wesentlichen orthogonal zu der Ladefläche der Fördereinrichtung (18) verlaufenden Achse oder um eine im Wesentlichen vertikale Achse von einer Betriebsposition (26) in eine Transportposition (28) verschwenkbar ist.

5. Straßenfräsmaschine (1) nach einem der Ansprüche 1 bis 3, **dadurch gekennzeichnet, dass** die Abschirmeinrichtung (6) in Längsrichtung der Fördereinrichtung (18) von einer hinteren Transportposition (28) in eine vordere Betriebsposition (26) verschiebbar ist.

6. Straßenfräsmaschine (1) nach einem der Ansprüche 1 bis 3, **dadurch gekennzeichnet, dass** die Abschirmeinrichtung (6) um eine im Wesentlichen horizontale Achse von einer Betriebsposition (26) vorzugsweise nach unten in eine Transportposition (28) schwenkbar ist.

7. Straßenfräsmaschine (1) nach einem der Ansprüche 1 bis 6, **dadurch gekennzeichnet, dass** die Abschirmeinrichtung (6) einen u-förmigen Querschnitt aufweist, der das abgefräste Material seitlich mit Seitenteilen (20) und nach oben mit einer Abdeckung (22) abschirmt.

8. Straßenfräsmaschine (1) nach einem der Ansprüche 1 bis 7, **dadurch gekennzeichnet, dass** die Abschirmeinrichtung (6) mehrteilig aus seitlich verschwenkbaren oder verschiebbaren oder montierbaren Klappen als Seitenteile (20) mit oder ohne eine Abdeckung (22) gebildet ist.

9. Straßenfräsmaschine (1) nach Anspruch 8, **dadurch gekennzeichnet, dass** die Abdeckung (22) der Abschirmeinrichtung (6) ein Deckblech oder ein Siebblech oder ein flexibles Flächengebilde aufweist.

10. Straßenfräsmaschine (1) nach einem der Ansprüche 1 bis 9, **dadurch gekennzeichnet, dass** zumindest die Abdeckung (22) der Abschirmeinrichtung (6) einen Krümmungsradius in Förderrichtung (24) aufweist, der größer oder gleich der weitestgehenden Wurfparabel (9) bei maximaler Fördergeschwindigkeit des abgefrästen Materials ist.

11. Straßenfräsmaschine (1) nach einem der Ansprüche 1 bis 10, **dadurch gekennzeichnet, dass** die Seitenteile (20) der Abschirmeinrichtung (6) eine in Förderrichtung (24) sich nach unten erweiternde vertikale Breite aufweisen.

12. Verfahren zum Abfräsen und Abtransportieren eines abgefrästen Materialstroms einer Straßenfräsmaschine (1) nach Anspruch 1, bei dem das abgefräste Material (3) im Fräsbetrieb von der Fräswalze (8) übernommen wird und an einem Abwurfende (12) einer Fördereinrichtung (18) entlang einer Wurfparabel (9) auf eine Abwurfstelle abgeladen wird, **dadurch gekennzeichnet, dass** der Materialstrom am Abwurfende (12) der Fördereinrichtung (18) von einer Abschirmeinrichtung (6) ohne Beeinflussung der Wurfparabel (9) zumindest seitlich abgeschirmt wird.

13. Verfahren nach Anspruch 12, **dadurch gekennzeichnet, dass** die Abschirmeinrichtung (6) für den Fräsbetrieb der Straßenfräsmaschine (1) in eine Betriebsposition (26) überführt wird und beim Stillstand des Fräsbetriebs und/oder für den Transport der Straßenfräsmaschine in eine Transportposition (28) verlagert wird.

14. Verfahren nach Anspruch 12 oder 13, dass in der Abschirmeinrichtung (6) für die Abschirmung nach oben eine Abdeckung (22) mit einem Krümmungsradius in Förderrichtung (24) verwendet wird, der größer oder gleich der weitestgehenden Wurfparabel (9) bei maximaler Fördergeschwindigkeit des abgefrästen Materials (3) ist.

15. Verfahren nach einem der Ansprüche 12 bis 14, **dadurch gekennzeichnet dass** die seitliche Abschirmung (20) in Förderrichtung (24) derart erweitert wird, dass das geförderte Material auch bei der niedrigsten Fördergeschwindigkeit seitlich abgeschirmt wird.

## Claims

1. Self-propelled road milling machine (1), in particular cold milling machine, for working roads, with a milling drum (8) supported at a machine frame (2), no less than one conveying device (18) arranged at the machine frame (2), which device accepts the milled-off material (3) from the milling drum (8) and discharges said milled-off material (3), in conveying direction (24), at a discharge end (12) along a parabolic trajectory (9) onto a point of discharge,
**characterized in that**
the conveying device (18) comprises a shielding device (6) at the discharge end (12), where said shielding device shields the material milled off and leaving the conveying device (18) without influencing the parabolic trajectory (9) on a part of the path to the point of discharge at least by means of lateral sections (20).

2. Road milling machine (1) in accordance with claim 1, **characterized in that** the shielding device (6) is arranged in an operating position (26) or in a transport position (28).

3. Road milling machine (1) in accordance with claim 1 or 2, **characterized in that** the shielding device (6) is transferable from an operating position (26) into a transport position (28).

4. Road milling machine (1) in accordance with one of claims 1 to 3, **characterized in that** the shielding device (6) is pivotable laterally about an axis extending essentially orthogonally to the loading surface of the conveying device (18), or about an essentially vertical axis, from an operating position (26) into a transport position (28).

5. Road milling machine (1) in accordance with one of claims 1 to 3, **characterized in that** the shielding device (6) is shiftable in longitudinal direction of the conveying device (18) from a rear transport position (28) into a forward operating position (26).

6. Road milling machine (1) in accordance with one of claims 1 to 3, **characterized in that** the shielding device (6) is pivotable preferably downwards about an essentially horizontal axis from an operating position (26) into a transport position (28).

7. Road milling machine (1) in accordance with one of claims 1 to 6, **characterized in that** the shielding device (6) has a U-shaped cross-section which shields the milled-off material to the sides by means of lateral sections (20) and to the top by means of a cover (22).

8. Road milling machine (1) in accordance with one of claims 1 to 7, **characterized in that** the shielding device (6) is of multi-part design comprising laterally pivotable or shiftable or mountable panels as lateral sections (20) with or without a cover (22).

9. Road milling machine (1) in accordance with claim 8, **characterized in that** the cover (22) of the shielding device (6) comprises a cover plate or screen plate or a flexible surface structure.

10. Road milling machine (1) in accordance with one of claims 1 to 9, **characterized in that**, as a minimum, the cover (22) of the shielding device (6) exhibits a curvature radius in the conveying direction (24) which is larger than or the same as the farthest-reaching parabolic trajectory (9) at maximum conveying speed of the milled-off material.

11. Road milling machine (1) in accordance with one of claims 1 to 10, **characterized in that** the lateral sections (20) of the shielding device (6) feature a vertical width which increases downwards in the conveying direction (24).

12. Method for milling off and transporting away a milled-off stream of material of a road milling machine (1) of claim 1, in which, during the milling operation, the milled-off material (3) is accepted from the milling drum (8) and is discharged at a discharge end (12) of a conveying device (18) along a parabolic trajectory (9) onto a point of discharge, **characterized in that** the stream of material at the discharge end (12) of the conveying device (18) is shielded, at least to the sides, by a shielding device (6) without influencing the parabolic trajectory (9).

13. Method in accordance with claim 12, **characterized in that**, for the milling operation of the road milling machine (1), the shielding device (6) is transferred into an operating position (26) and, during standstill of the milling operation and/or for transport of the cold milling machine, is moved into a transport position (28).

14. Method in accordance with claim 12 or 13, **characterized in that**, for shielding towards the top, a cover (22) is used in the shielding device (6) which has a curvature radius in the conveying direction (24) that is larger than or the same as the farthest-reaching parabolic trajectory (9) at maximum conveying speed of the milled-off material (3).

15. Method in accordance with one of claims 12 to 14, **characterized in that** the lateral shielding device (20) is widened in the conveying direction (24) in such a fashion that the conveyed material is shielded laterally also at the lowest possible conveying speed.

## Revendications

1. Fraiseuse routière automotrice (1), en particulier fraiseuse à froid, destinée au traitement des routes, avec un tambour de fraisage (8) positionné au niveau d'un châssis de machine (2), avec au moins un moyen de convoyage (18), disposé au niveau du châssis de machine (2) et prenant en charge le matériau fraisé (3) par le tambour de fraisage (8) et le déchargeant dans la direction de convoyage (24), au niveau d'une extrémité de déversement (12) le long d'une parabole de projection (9), sur un point de déversement,
**caractérisée en ce que**
le moyen de convoyage (18) présente, au niveau de l'extrémité de déversement (12), un moyen formant écran (6) qui forme un écran, tout au moins au moyen de parties latérales (20), pour le matériau fraisé et quittant le moyen de convoyage (18), sans exercer d'influence sur la parabole de projection (9), sur une partie de la distance jusqu'au point de déversement.

2. Fraiseuse routière (1) selon la revendication 1, **caractérisée en ce que** le moyen formant écran (6) est disposé dans une position de service (26) ou dans une position de transport (28).

3. Fraiseuse routière (1) selon la revendication 1 ou 2, **caractérisée en ce que** le moyen formant écran (6) peut être transféré d'une position de service (26) dans une position de transport (28).

4. Fraiseuse routière (1) selon l'une des revendications 1 à 3, **caractérisée en ce que** le moyen formant écran (6) est capable de pivoter latéralement autour d'un axe s'étendant, pour l'essentiel, de manière orthogonale par rapport à la surface de chargement du moyen de convoyage (18) ou autour d'un axe étant pour l'essentiel vertical depuis une position de service (26) dans une position de transport (28).

5. Fraiseuse routière (1) selon l'une des revendications 1 à 3, **caractérisée en ce que** le moyen formant écran (6) peut être déplacé dans la direction longitudinale du moyen de convoyage (18) depuis une position de transport (28) en arrière dans une position de service (26) avancée.

6. Fraiseuse routière (1) selon l'une des revendications 1 à 3, **caractérisée en ce que** le moyen formant écran (6) peut être orienté autour d'un axe étant, pour l'essentiel, horizontal depuis une position de service (26), de préférence vers le bas, dans une position de transport (28).

7. Fraiseuse routière (1) selon l'une des revendications 1 à 6, **caractérisée en ce que** le moyen formant écran (6) présente une section transversale en forme de U qui forme latéralement un écran pour le matériau fraisé au moyen de parties latérales (20) et vers le haut au moyen d'un recouvrement (22).

8. Fraiseuse routière (1) selon l'une des revendications 1 à 7, **caractérisée en ce que** le moyen formant écran (6) est formé de plusieurs parties composées de volets capables de pivoter ou pouvant être déplacés ou pouvant être montés, de manière latérale, pour servir de partie latérale (20) avec ou sans un recouvrement (22).

9. Fraiseuse routière (1) selon la revendication 8, **caractérisée en ce que** le recouvrement (22) du moyen formant écran (6) présente une tôle de recouvrement ou une tôle de tamisage ou une structure plane flexible.

10. Fraiseuse routière (1) selon l'une des revendications 1 à 9, **caractérisée en ce que** tout au moins le recouvrement (22) du moyen formant écran (6) présente un rayon de courbure, dans la direction de convoyage (24), qui est supérieur ou égal à la parabole de projection (9) la plus ouverte, à la vitesse maximale de convoyage du matériau fraisé.

11. Fraiseuse routière (1) selon l'une des revendications 1 à 10, **caractérisée en ce que** les parties latérales (20) du moyen formant écran (6) présentent une largeur verticale qui s'étend vers le bas dans la direction de convoyage (24).

12. Procédé destiné au fraisage et à l'évacuation d'un flux de matériau fraisé d'une fraiseuse routière (1) selon la revendication 1, pour lequel le matériau fraisé (3) est pris en charge, en mode de fraisage, par le tambour de fraisage (8) et est déchargé au niveau d'une extrémité de déversement (12) d'un moyen de convoyage (18), le long d'une parabole de projection (9), sur un point de déversement, **caractérisé en ce que** le flux de matériau est protégé, tout au moins latéralement, par effet d'écran par un moyen formant écran (6), au niveau de l'extrémité de déversement (12) du moyen de convoyage (18), sans exercer d'influence sur la parabole de projection (9).

13. Procédé selon la revendication 12, **caractérisé en ce que** le moyen formant écran (6) est transféré dans une position de service (26) pour le service de fraisage de la fraiseuse routière (1) et est positionné dans une position de transport (28) lorsque le service de fraisage est à l'arrêt et/ou pour le transport de la fraiseuse routière.

14. Procédé selon la revendication 12 ou 13, **caractérisé en ce que** dans le moyen formant écran (6), un recouvrement (22) est utilisé pour faire écran vers le haut et dont le rayon de courbure dans la direction de convoyage (24) est supérieur ou égal à la parabole de projection (9) la plus ouverte, à la vitesse maximale de convoyage du matériau fraisé (3).

15. Procédé selon l'une des revendications 12 à 14, **caractérisé en ce que** l'écran latéral (20) est élargi, dans la direction de convoyage (24), de telle sorte que le matériau convoyé est également protégé latéralement par effet d'écran pendant la vitesse de convoyage la plus basse.
